# EUROPÄISCHE PATENTSCHRIFT

(11) **EP 3 325 119 B1**
(45) Veröffentlichungstag und Bekanntmachung des Hinweises auf die Patenterteilung: **02.10.2019**
(21) Anmeldenummer: 16753828.9
(22) Anmeldetag: 19.08.2016
(51) Int. Cl.: B01D 3/00, B01D 3/14

(54) **KOLONNE MIT ZYLINDRISCHER TRENNWAND**
COLUMN WITH CYLINDRICAL DIVIDING WALL
COLONNE AVEC UNE PARTITION CYLINDRIQUE

(30) Priorität: 16.11.2015 DE 102015014676
(43) Veröffentlichungstag der Anmeldung: 30.05.2018
(73) Patentinhaber: JULIUS MONTZ GmbH, D-40723 Hilden (DE)
(72) Erfinder: JANSEN, Helmut, 41542 Dormagen (DE); RIETFORT, Thomas, 46236 Bottrop (DE); ZICH, Egon, 42799 Leichlingen (DE)
(74) Vertreter: Cohausz Hannig Borkowski Wißgott
(86) Internationale Anmeldenummer: PCT/EP2016/001410
(87) Internationale Veröffentlichungsnummer: WO 2017/084729

(56) Entgegenhaltungen:
- DE-A1- 3 244 521
- US-A- 4 681 661
- US-A1- 2011 210 457
- US-A1- 2014 005 458
- US-B1- 6 240 744

## Beschreibung

Die Erfindung betrifft eine Kolonne zum Durchführen thermischer Trennungen und/oder chemischer Reaktionen mit einer senkrechten zylindrischen Kolonnenaußenwand, die einen Innenraum umgibt, der durch eine senkrechte zylindrische Trennwand in zwei Räume unterteilt ist, in denen Stoffaustauschpakete, Packungen und/oder Stoffaustauschböden angeordnet sind.

Es ist bekannt, den Innenraum einer Kolonne durch eine senkrechte Trennwand zu teilen, wie dies die EP 1 088 577 B1 zeigt. Darüber hinaus ist es bekannt, die senkrechte Trennwand zylindrisch auszuführen. Hierbei hat es sich gezeigt, dass auf der Wandseite mit der höheren Temperatur der Dampf leicht kondensiert und damit die Arbeitsweise verschlechtert. Auch kann es zu einer Verdampfung auf der Seite mit der niedrigeren Temperatur kommen. Ferner ist eine Störung der Thermodynamik durch die Kondensation und Verdampfung häufiger erfolgt. Schließlich kann es zu einer mechanischen Belastung der Trennwand durch unterschiedliche Temperaturen und damit zu Wärmespannungen und Schiefstellung der Kolonne kommen.

Aus der DE 32 44 521 A1 ist es an sich bekannt, bei einer Vorrichtung zum Kontaktieren von Gasen und Flüssigkeiten einen Gas führenden Kanal anzuordnen. Ferner ist es aus der US 2014/0005458 A1 bekannt, bei einer Vorrichtung zum Entfernen von Säure und Feuchtigkeit eine trennende Doppelwand aus ebenen Wänden anzuordnen.

Aufgabe der Erfindung ist es, bei hohen Temperaturunterschieden auf den beiden Seiten einer Kolonnentrennwand die dadurch entstehenden Nachteile zu vermeiden.

Diese Aufgabe wird erfindungsgemäß dadurch gelöst, dass die zylindrische Trennwand als Doppelwand zwei zueinander koaxiale zylindrische Wände mit unterschiedlich großen Radien aufweist, wobei der der Zwischenraum der Trennwand einen geschlossenen Trennraum bildet und wobei der radiale Abstand der zwei zylindrischen Wände voneinander 0,1 bis 10 cm, vorzugsweise 2 bis 5 cm beträgt.

Eine in dieser Weise isolierte Trennwand verhindert Kondensation und Verdampfungen und verbessert damit die Thermodynamik und die Stabilität der Kolonne. Hierbei verbessert der geschlossene Zwischenraum die Isolierwirkung.

Vorzugsweise wird vorgeschlagen, dass die zylindrischen Wände aus Blech bestehen. Der geschlossene Zwischenraum kann auch geeignet sein, Unterdruck aufzuweisen.

Eine genaue Steuerung der Isolierungswirkung als auch eine Verbesserung der Isolierung wird dann erreicht, wenn der Zwischenraum mindestens einen Gaszufluss- und einen Gasabflussanschluss aufweist. Auch ist hierzu von Vorteil, wenn der Zwischenraum in der Lage ist, Luft, Helium, Stickstoff oder Kohlenstoffdioxid zu enthalten.

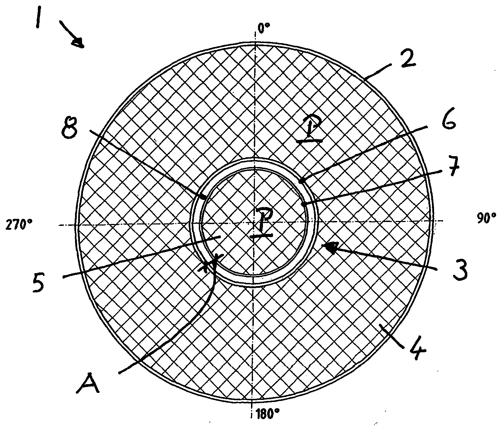

Ausführungsbeispiele der Erfindung werden im Folgenden näher beschrieben. Die einzige Figur zeigt einen waagerechten Schnitt durch eine Kolonne in Höhe der doppelten Trennwand.

Die Kolonne 1 zum Durchführen thermischer Trennungen und/oder chemischer Reaktionen weist eine zylindrische Außenwand 2 auf mit senkrechter Zylinderachse. Die zylindrische Kolonnenaußenwand 2 umschließt einen Innenraum, in der sich mittig und koaxial zur Außenwand eine zylindrische Trennwand 3 befindet, die als Doppelwand ausgeführt ist.

Die zur Außenwand 2 koaxiale Trennwand 3 trennt damit über einen bestimmten Höhenbereich der Kolonne den Kolonnenraum in einen Außenraum 4 und einen innerhalb der Trennwand befindlichen Innenraum 5. In den Räumen 4 und 5 befinden sich Stoffaustauschpakete, Packungen und/oder Stoffaustauschböden P.

Die als Doppelwand ausgeführte zylindrische Trennwand 3 besteht aus zwei zueinander koaxial angeordneten zylindrischen Wände und zwar einer ersten zylindrischen äußeren Innenwand 6 und einer zweiten zylindrischen inneren Wand 7 mit zueinander unterschiedlich großen Radien, so dass ein Zwischenraum 8 als Trennraum besteht, der als Ringraum einen gleichbleibenden Abstand A besitzt. Dieser radiale Abstand A der zwei zylindrischen Wände zueinander beträgt 0,1 bis 10 cm, vorzugsweise 2 bis 5 cm.

Vorzugsweise bilden die aus Blech bestehenden zylindrischen Wände 6, 7 einen geschlossenen Trennraum bzw. Zwischenraum 8, in dem am oberen und unteren Ende der Zwischenraum durch einen oberen und unteren Abschlussring verschlossen ist. Hierbei kann der geschlossene Zwischenraum Unterdruck aufweisen, um die Isolierwirkung zu erhöhen.

Eine genaue Steuerung der Isolierfunktion der Trennwand 3 wird dadurch erreicht, dass der Zwischenraum 8 mindestens einen Gaszufluss- und einen Gasabflussanschluss aufweist. Hierbei kann der Zwischenraum 8 Luft, Helium, Stickstoff oder Kohlenstoffdioxid aufweisen.

## Patentansprüche

1. Kolonne zum Durchführen thermischer Trennungen und/oder chemischer Reaktionen mit einer senkrechten zylindrischen Kolonnenaußenwand (2), die einen Innenraum umgibt, der durch eine senkrechte zylindrische Trennwand (3) in zwei Räume (4, 5) unterteilt ist, in denen Stoffaustauschpakete (P), Packungen und/oder Stoffaustauschböden angeordnet sind, **dadurch gekennzeichnet, dass** die zylindrische Trennwand (3) als Doppelwand zwei zueinander koaxiale zylindrische Wände (6, 7) mit unterschiedlich großen Radien aufweist, wobei der der Zwischenraum (8) der Trennwand (3) einen geschlossenen Trennraum bildet, und wobei der radiale Abstand (A) der zwei zylindrischen Wände (6, 7) voneinander 0,1 bis 10 cm, vorzugsweise 2 bis 5 cm beträgt.

2. Kolonne nach Anspruch 1, **dadurch gekennzeichnet, dass** die zylindrischen Wände (6, 7) aus Blech bestehen.

3. Kolonne nach Anspruch 1 oder 2, **dadurch gekennzeichnet, dass** der geschlossene Zwischenraum (8) geeignet ist, Unterdruck aufzuweisen.

4. Kolonne nach einem der vorherigen Ansprüche, **dadurch gekennzeichnet, dass** der Zwischenraum (8) mindestens einen Gaszufluss- und einen Gasabflussanschluss aufweist.

5. Kolonne nach einem der vorherigen Ansprüchen, **dadurch gekennzeichnet, dass** der Zwischenraum (8) in der Lage ist, Luft, Helium, Stickstoff oder Kohlendioxid zu enthalten.

## Claims

1. Column for carrying out thermal separations and/or chemical reactions having a vertical cylindrical column outer wall (2) enclosing an inner chamber which is subdivided by a vertical cylindrical partition (3) into two chambers (4, 5) in which mass transfer packages (P), packings and/or mass transfer trays are arranged, **characterized in that** the double-walled cylindrical partition (3) comprises two mutually coaxial cylindrical walls (6, 7) with radii of different sizes wherein, the interspace (8) of the partition (3) forms a closed dividing chamber and wherein
the radial spacing (A) of the two cylindrical walls (6, 7) from one another amounts to 0.1 to 10 cm, preferably 2 to 5 cm.

2. Column according to Claim 1, **characterized in that** the cylindrical walls (6, 7) consist of sheet metal.

3. Column according to Claim 1 or 2, **characterized in that** the closed interspace (8) is suitable for having a reduced pressure.

4. Column according to one of the preceding claims, **characterized in that** the interspace (8) comprises at least one gas inflow port and one gas outflow port.

5. Column according to one of the preceding claims, **characterized in that** the interspace (8) is capable of containing air, helium, nitrogen or carbon dioxide.

## Revendications

1. Colonne permettant d'effectuer des séparations thermiques et/ou des réactions chimiques avec une paroi extérieure de colonne cylindrique verticale (2), qui entoure une chambre intérieure, qui est divisée par une partition cylindrique verticale (3) en deux chambres (4, 5), dans lesquelles des paquets d'échange de matières (P), des garnitures et/ou des plateaux d'échange de matières sont disposés, **caractérisée en ce que** la partition cylindrique (3) présente en tant que double paroi deux parois cylindriques coaxiales l'une à l'autre (6, 7) avec des rayons de grandeur différente, dans laquelle l'espace intermédiaire (8) de la partition (3) forme un espace de séparation fermé, et dans laquelle la distance radiale (A) des deux parois cylindriques (6, 7) l'une de l'autre vaut 0,1 à 10 cm, de préférence 2 à 5 cm.

2. Colonne selon la revendication 1, **caractérisée en ce que** les parois cylindriques (6, 7) sont constituées de tôle.

3. Colonne selon une revendication 1 ou 2, **caractérisée en ce que** l'espace intermédiaire fermé (8) convient pour présenter une dépression.

4. Colonne selon l'une quelconque des revendications précédentes, **caractérisée en ce que** l'espace intermédiaire (8) présente au moins un raccord d'arrivée de gaz et un raccord d'évacuation de gaz.

5. Colonne selon l'une quelconque des revendications précédentes, **caractérisée en ce que** l'espace intermédiaire (8) est apte à contenir de l'air, de l'hélium, de l'azote ou du dioxyde de carbone.
